# EUROPEAN PATENT APPLICATION

(11) **EP 3 730 232 A1**
(43) Date of publication of application: **28.10.2020**
(21) Application number: 19776698.3
(22) Date of filing: 13.02.2019
(51) Int. Cl.: B22F 1/00, C09D 1/00, C09D 7/61, C09D 11/00, C09D 201/00, B22F 9/30

(54) **SILVER POWDER FOR INK OR PAINT**

(30) Priority: 29.03.2018 JP 2018064197
(71) Applicant: TOKUSEN KOGYO CO., LTD., Ono-shi Hyogo 675-1361 (JP)
(72) Inventor: LEE, Woojin, (JP); KANAMORI, Takayuki, (JP); KAMISHIMA, Michiko, (JP)
(74) Representative: Manitz Finsterwald Patent- und Rechtsanwaltspartnerschaft mbB
(86) International application number: PCT/JP2019/005037
(87) International publication number: WO 2019/187718

(57) **Abstract**

Silver powder includes multiple particles 2 containing silver as a main component. A ratio of the number of particles 2 which are flake-like and each of which has a monocrystalline structure and has a largest plane that is a lattice plane (111), to the total number of particles, is not less than 95%. The silver powder is water-dispersible. In the silver powder, a median size D50 is not less than 0.1 µm and not greater than 10 µm, a standard deviation of particle sizes is not greater than 5 µm, an average thickness Tave is not greater than 300 nm, and an aspect ratio (D50/Tave) is not less than 4.

## Description

### TECHNICAL FIELD

The present invention relates to silver powder suitable for ink and paint.

### BACKGROUND ART

Aluminium particles are used for ink having metallic luster. The ink that contains aluminium particles is silver-colored. JP2002-20668 discloses the ink that contains a surface-treated aluminium film. Aluminium is relatively low-priced. Furthermore, aluminium can be easily processed so as to, for example, reduce the film thickness.

Use of organic solvents, which are environmentally hazardous substances, tends to be regulated globally in view of the environment. In the fields of ink and paint, shift from organic paint to aqueous paint is being promoted.

Aluminium particles easily react with water and alcohol. By dispersing aluminium particles in an aqueous solvent, reaction rapidly occurs. Particularly, in a case where aluminium particles have small particle sizes, reaction easily occurs. In a case where aluminium particles have large particle sizes, reaction can be suppressed. However, ink that contains aluminium particles having large particle sizes has a color close to white instead of silver. Aluminium particles are not suitably used in an aqueous solvent.

JP2002-38067 discloses aqueous ink that contains flat silver particles. The ink is silver-colored and has metallic luster. Reactivity between silver particles and water is low. The aqueous ink has excellent stability.

### CITATION LIST

### PATENT LITERATURE

Patent Literature 1: JP2002-20668
Patent Literature 2: JP2002-38067

### SUMMARY OF THE INVENTION

### PROBLEMS TO BE SOLVED BY THE INVENTION

Silver particles usually have non-uniform particle shapes. A coating film obtained from the ink has poor smoothness. Sufficiently beautiful silver hue is unlikely to be obtained in the coating film.

Flattening of particles is effective for improving the color. The flattening is usually performed by a drawing process using a ball mill or the like. Since lubricant is used in the drawing process, hydrophobic organic substances are adhered to the surface of the flat silver particles. The organic substances inhibit particles from dispersing into water. The roughness of the surfaces of the particles may increase in the drawing process. The increased roughness causes irregular reflection of light. The irregular reflection deteriorates metallic luster.

Particles which have been made fine can contribute to smoothness of a coating film. However, fine particles cause absorption of light due to so-called surface plasmon resonance. By the absorption, the coating film has a yellowish or a blackish color. Sufficiently beautiful silver hue is unlikely to be obtained in the coating film.

Such a problem may arise in not only a coating film obtained from ink but also a coating film obtained from paint.

An object of the present invention is to provide silver powder that allows a coating film having excellent appearance to be obtained.

### SOLUTION TO THE PROBLEMS

Silver powder, for ink or paint, according to the present invention includes multiple particles containing silver as a main component. A ratio of the number of particles which are flake-like and each of which has a monocrystalline structure and has a largest plane that is a lattice plane (111), to the total number of particles, is not less than 95%.

Preferably, the silver powder is water-dispersible.

Preferably, in the silver powder, a median size D50 is not less than 0.1 µm and not greater than 10 µm.

Preferably, in the silver powder, a standard deviation of particle sizes is not greater than 5 µm.

Preferably, in the silver powder, an average thickness Tave is not greater than 300 nm.

Preferably, in the silver powder, an aspect ratio (D50/Tave) is not less than 4.

According to another aspect, ink according to the present invention includes the silver powder. The silver powder includes multiple particles of which the material is silver. A ratio of the number of particles which are flake-like and each of which has a monocrystalline structure and has a largest plane that is a lattice plane (111), to the total number of particles, is not less than 95%.

According to still another aspect, paint according to the present invention includes the silver powder. The silver powder includes multiple particles of which the material is silver. A ratio of the number of particles which are flake-like and each of which has a monocrystalline structure and has a largest plane that is a lattice plane (111), to the total number of particles, is not less than 95%.

### ADVANTAGEOUS EFFECTS OF THE INVENTION

The crystalline structure of silver is a face-centered cubic lattice. In the face-centered cubic lattice, the density of atoms is high in the lattice plane (111). The silver powder according to the present invention is flake-like, and the largest plane is the lattice plane (111) in the silver powder. Therefore, in the coating film, the light reflectance is high. The silver powder contributes to specularity and luster of the coating film.

### BRIEF DESCRIPTION OF THE DRAWINGS

[FIG. 1] FIG. 1 is a perspective view of a particle of silver powder according to one embodiment of the present invention.
[FIG. 2] FIG. 2 illustrates a photomicrograph of a coating film that contains the silver powder according to the present invention.

### DESCRIPTION OF EMBODIMENTS

The following will describe in detail the present invention based on preferred embodiments with reference where appropriate to the accompanying drawing.

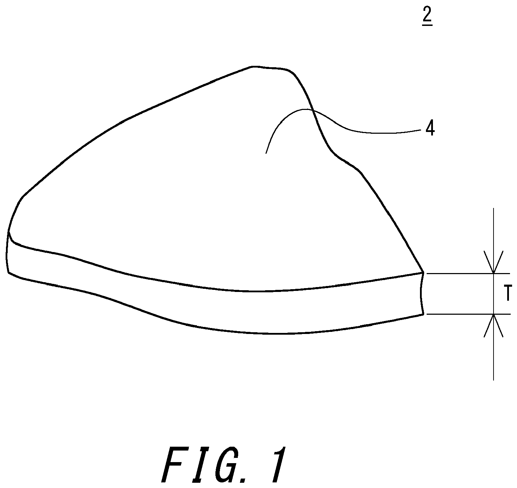

Silver powder according to the present invention is an aggregation of multiple particles. FIG. 1 illustrates a particle 2. The particles 2 are flake-like. The particle 2 has a monocrystalline structure.

The material of the particles 2 is silver. A coating film that contains the particles 2 is silver-colored. The coating film has excellent luxuriousness. The coating film has excellent appearance.

The crystalline structure of silver is a face-centered cubic lattice. In the face-centered cubic lattice, the density of atoms is high in the lattice plane (111). In FIG. 1, reference numeral 4 represents a largest plane 4. The largest plane 4 has the largest area among planes of each particle 2. The largest plane 4 is the lattice plane (111) .

In the coating film, the particle 2 is oriented such that the largest plane 4 is almost perpendicular to the thickness direction of the coating film. In other words, the thickness direction of the particle 2 is almost the same as the thickness direction of the coating film.

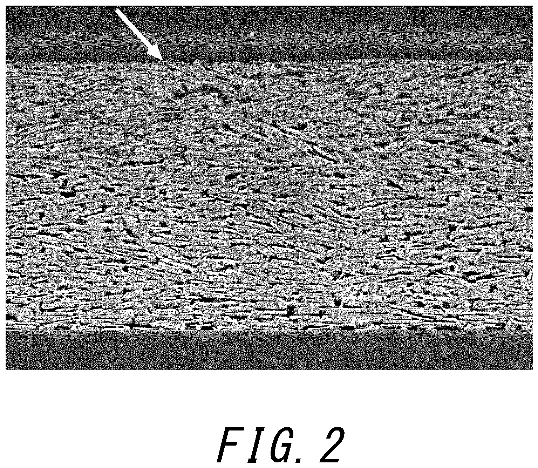

FIG. 2 illustrates the coating film that contains the particles 2. In this example, the particle size of the particle 2 is about 1.5 µm to 2.5 µm. In FIG. 2, an arrow represents the print surface of the coating film. As is apparent from FIG. 2, the thickness direction of each particle 2 is almost the same as the thickness direction (up-down direction in FIG. 2) of the coating film.

In the coating film in which the thickness direction of each particle 2 is almost the same as the thickness direction of the coating film, the surface of the coating film almost coincides with the lattice plane (111). The coating film has a high light reflectance. The coating film has excellent specularity and luster.

The silver powder may contain other silver particles together with the particles 2 which are flake-like and each of which has a monocrystalline structure and has the largest plane 4 that is the lattice plane (111). Preferably, in the silver powder, a ratio P1 of the number of the particles 2 which are flake-like and each of which has a monocrystalline structure and has the largest plane 4 that is the lattice plane (111), relative to the total number of particles, is not less than 95%. The ratio P1 is more preferably not less than 97% and particularly preferably not less than 99%. Ideally, the ratio P1 is 100%.

The particles 2 do not have, on the surfaces thereof, a layer formed of a hydrophobic organic substance such as fatty acid. Therefore, the particles 2 can disperse in an aqueous solvent. The particles 2 can be dispersed and contained in aqueous ink. The particles 2 can be further dispersed and contained in aqueous paint. The particle 2 has excellent environmental friendliness.

The particles 2 may have, on the surfaces, a layer formed of a hydrophilic organic substance. The layer allows enhancement of dispersion of the particles 2 into an aqueous solvent. Also in a case where the particles 2 have a layer formed of a hydrophilic organic substance, the main component of the particles 2 is silver. Specifically, the content of silver in the particles 2 is preferably not less than 98% by weight and particularly preferably not less than 99% by weight.

The median size D50 of the silver powder is preferably not less than 0.1 µm and preferably not greater than 10 µm. In the coating film that contains the silver powder in which the median size D50 is not less than 0.1 µm, surface plasmon resonance is unlikely to occur. In the coating film, the color is inhibited from becoming yellowish and blackish. The coating film has a beautiful silver color. Ink and paint that contain the silver powder in which the median size D50 is not greater than 10 µm, have excellent coatability. Furthermore, in the coating film that contains the silver powder in which the median size D50 is not greater than 10 µm, the density of silver powder is high. The surface of the coating film is not rough. The coating film has excellent light reflectivity. Therefore, the coating film has excellent specularity and luster. From these standpoints, the median size D50 is more preferably not greater than 8 µm and particularly preferably not greater than 5 µm. The median size D50 is measured by a laser diffraction type particle size analyzer (for example, "LA-950V2" from HORIBA, Ltd).

The standard deviation σD of the particle sizes in the silver powder is preferably not greater than 5 µm. In the silver powder in which the standard deviation σD is not greater than 5 µm, the content of the particles 2 in which the particle size is not greater than 100 nm is small. Surface plasmon resonance is unlikely to occur in the coating film that contains the silver powder. In the coating film, the color is inhibited from becoming yellowish and blackish. The coating film has a beautiful silver color. From this standpoint, the standard deviation σD is more preferably not greater than 4 µm and particularly preferably not greater than 3 µm.

The average thickness Tave in the silver powder is preferably not greater than 300 nm. In the coating film that contains the silver powder in which the average thickness Tave is not greater than 300 nm, the tilt of the particle 2 that partially overlaps another particle 2 is reduced. In the coating film, the thickness direction of the coating film is likely to become the same as the thickness direction of the particle 2. The coating film has a high light reflectance. The coating film has excellent specularity and luster. From these standpoints, the average thickness Tave is more preferably not greater than 200 nm and particularly preferably not greater than 100 nm. From the standpoint of strength of the particles 2 and ease of manufacturing the particles 2, the average thickness Tave is preferably not less than 5 nm, more preferably not less than 10 nm, and particularly preferably not less than 20 nm. The average thickness Tave is calculated by averaging thicknesses T (see FIG. 1) of 100 particles randomly extracted. Each thickness T is visually measured based on a SEM photograph. The thickness T is measured in the direction perpendicular to the largest plane 4.

An aspect ratio (D50/Tave) of the silver powder is preferably not less than 4. In the coating film that contains the silver powder in which the aspect ratio (D50/Tave) is not less than 4, the surface is not rough. Furthermore, in the coating film, the thickness direction of the coating film is likely to become the same as the thickness direction of the particle. The coating film has a high light reflectance. The coating film has excellent specularity and luster. Furthermore, in the coating film, the light absorption wavelength is long. Therefore, surface plasmon resonance is unlikely to occur. In the coating film, the color is inhibited from becoming yellowish and blackish. The coating film has a beautiful silver color. From these standpoints, the aspect ratio (D50/Tave) is more preferably not less than 8 and particularly preferably not less than 10. From the standpoint of strength of the particles and ease of manufacturing the particles, the aspect ratio (D50/Tave) is preferably not greater than 1000, more preferably not greater than 500, and particularly preferably not greater than 100.

The arithmetical mean roughness Ra of the largest plane 4 of the particle 2 is preferably not greater than 10 nm. The largest plane 4 of the particle 2 is smooth. In the coating film that contains the particles 2, irregular reflection of light can be reduced. From this standpoint, the arithmetical mean roughness Ra is more preferably not greater than 8 nm and particularly preferably not greater than 5 nm. From the standpoint of ease of manufacturing, the arithmetical mean roughness Ra is preferably not less than 1 nm.

The arithmetical mean roughness Ra is measured by an atomic force microscope (AFM). The AFM is a kind of scanning probe microscope. The AFM includes a cantilever and a probe attached to the tip of the cantilever. The probe scans the surface of the particle 2. The cantilever is displaced in the up-down direction by a force acting between atoms of a sample and the probe. The displacement is measured. The arithmetical mean roughness Ra of the particle 2 is calculated based on the measurement result.

In the present invention, "SPM-9600" from SHIMADZU CORPORATION is used as the AFM. The measurement conditions are as follows.

### Mode: contact mode

Cantilever: OMCL-TR800PSA-1 from Olympus Corporation
Resolution: 512×512 pixels
Height-direction resolution: 0.01 nm
Lateral-direction resolution: 0.2 nm

The distance for measurement of the arithmetical mean roughness Ra is 2 µm. In a case where measurement by the distance of 2 µm on the largest plane 4 is difficult, the measurement is performed by the largest possible distance on the largest plane 4.

The arithmetical mean roughness Ra of the largest plane 4 is measured for each of 10 particles 2 which have been randomly extracted. The 10 roughnesses Ra are averaged. The average represents the roughness Ra of the silver powder.

In the method for manufacturing the silver powder, a silver compound is dispersed in a carrier in liquid form by using a dispersant. The silver compound is typically silver oxalate. Silver oxalate is obtained through reaction between an aqueous solution of a silver compound as a material and an oxalic acid compound (oxalate compound). Impurities are removed from precipitate obtained by the reaction to obtain silver powder of silver oxalate.

From the standpoint that adverse influence on the environment is small, hydrophilic liquid is used as the carrier. Preferable specific examples of the carrier include water and alcohol. Water and alcohol each have a low boiling point. In dispersion liquid in which water and alcohol are used, pressure can be easily enhanced. Preferable examples of the alcohol include ethyl alcohol, methyl alcohol, and propyl alcohol. Two or more kinds of liquids may be used in combination for the carrier.

Silver oxalate does not substantially dissolve into the carrier. Silver oxalate is dispersed into the carrier. The dispersion can be promoted through ultrasonic wave treatment. The dispersion can be promoted also by the dispersant.

The dispersion liquid is heated while being stirred in a state where the dispersion liquid is pressurized by compressed air. The reaction represented by the following formula occurs by the heating. In other words, silver oxalate is decomposed by heat.

Ag₂C₂O₄ = 2Ag + 2CO₂

In the dispersion liquid, silver is deposited as the particles 2.

As means for obtaining the particles 2 which are flake-like and each of which has a monocrystalline structure and has the largest plane 4 that is the lattice plane (111), for example,
(1) setting the concentration of silver oxalate in the dispersion liquid within a predetermined range,
(2) using a predetermined dispersant,
(3) setting a pressure within a predetermined range during heating, and
(4) setting a stirring rate within a predetermined range
   are performed.

The concentration of silver oxalate in the dispersion liquid is preferably not less than 0.1 M and preferably not greater than 1.0 M. From the dispersion liquid in which the concentration is within the above-described range, the particles 2 which are flake-like and each of which has a monocrystalline structure and has the largest plane 4 that is the lattice plane (111), can be obtained. Furthermore, from the dispersion liquid in which the concentration is within the above-described range, powder in which the particle size distribution is small can be obtained. In the silver powder in which the particle size distribution is small, the content of the particles 2 in which the particle size is not greater than 100 nm is small. In the coating film that contains the silver powder, surface plasmon resonance is unlikely to occur and the color is inhibited from becoming yellowish and blackish. The coating film has a beautiful silver color. Furthermore, powder in which the arithmetical mean roughness Ra is small can be obtained from the dispersion liquid. In the coating film that contains the silver powder, irregular reflection of light can be reduced. From this standpoint, the concentration is particularly preferably not less than 0.2 M and particularly preferably not greater than 0.7 M.

A dispersant is preferably a hydrophilic dispersant in which the weight-average molecular weight is not less than 5000. By the dispersant, the particles 2 which are flake-like and each of which has a monocrystalline structure and has the largest plane 4 that is the lattice plane (111), can be obtained. The component of the layer of the above-described organic substance on the surfaces of the particles 2 is the hydrophilic dispersant. The weight-average molecular weight is more preferably not less than 8000. Preferable examples of the dispersant include polyvinylpyrrolidone in which the weight-average molecular weight is not less than 5000, polyethyleneimine in which the weight-average molecular weight is not less than 5000, polyethylene glycol in which the weight-average molecular weight is not less than 5000, and polyvinyl alcohol in which the weight-average molecular weight is not less than 5000. The bulky dispersant inhibits crystal growth of the particles 2 in nano order. In a case where silver oxalate is decomposed by heat under such an atmosphere, the particles 2 of silver preferentially grow from the (111) surface having the stablest structure in terms of energy. As a result, the particles 2 each having a large aspect ratio and having the largest plane 4 that is the lattice plane (111), can be obtained. Furthermore, powder generated by the dispersion liquid sufficiently disperses in the aqueous solvent. The dispersant adhered to the surfaces of the particles 2 coats the roughness (non-smoothness) of the print surface during application. Thus, scattering of light on the print surface is reduced to enhance luster.

The pressure of the atmosphere for decomposition reaction of silver oxalate is preferably higher than the atmospheric pressure. By the decomposition reaction under this atmosphere, the particles 2 which are flake-like and each of which has a monocrystalline structure and has the largest plane 4 that is the lattice plane (111), can be obtained. Furthermore, by the decomposition reaction under this atmosphere, powder in which the particle size distribution is small can be obtained. In the silver powder in which the particle size distribution is small, the content of the particles 2 in which the particle size is not greater than 100 nm is small. In the coating film that contains the silver powder, surface plasmon resonance is unlikely to occur and the color is inhibited from becoming yellowish and blackish. The coating film has a beautiful silver color. Furthermore, by the decomposition reaction under this atmosphere, powder in which the arithmetical mean roughness Ra is small can be obtained. In the coating film that contains the silver powder, irregular reflection of light can be reduced. From these standpoints, the pressure is preferably not lower than 2 kgf/cm². The pressure is preferably not higher than 10 kgf/cm².

During the decomposition reaction of silver oxalate, the stirring rate is preferably not less than 100 rpm. By stirring at a rate of not less than 100 rpm, the particles 2 which are flake-like and each of which has a monocrystalline structure and has the largest plane 4 that is the lattice plane (111), can be obtained. By stirring at a rate of not less than 100 rpm, aggregation of fine particles 2 can be reduced. Therefore, powder in which the particle size distribution is small can be obtained. In such silver powder in which the particle size distribution is small, the content of the particles 2 in which the particle size is not greater than 100 nm is small. In the coating film that contains the silver powder, surface plasmon resonance is unlikely to occur and the color is inhibited from becoming yellowish and blackish. The coating film has a beautiful silver color. Furthermore, by stirring at a rate of not less than 100 rpm, powder in which the aspect ratio (D50/Tave) is large can be obtained. In the coating film that contains the silver powder, the surface is not rough. Moreover, in the coating film, the thickness direction of the coating film and the thickness direction of the particle are likely to become the same. In the coating film, light reflectance is high. The coating film has excellent specularity and luster. Furthermore, in the coating film, the light absorption wavelength is long. Therefore, surface plasmon resonance is unlikely to occur. In the coating film, the color is inhibited from becoming yellowish and blackish. The coating film has a beautiful silver color. From these standpoints, the stirring rate is preferably not less than 130 rpm. The stirring rate is preferably not higher than 1000 rpm.

The silver powder according to the present invention disperses in an aqueous solvent, thereby obtaining aqueous ink, aqueous paint, and the like. The coating film obtained from the aqueous ink, the aqueous paint, and the like has a beautiful silver color.

### [Examples]

The following will show the effects of the present invention by means of examples, but the present invention should not be construed in a limited manner based on the description of these examples.

### [Example 1]

50 g of silver nitrate was dissolved into 1 L of distilled water to obtain a first solution. Meanwhile, 22.2 g of oxalic acid was dissolved into 1 L of distilled water to obtain a second solution. The first solution and the second solution were mixed to obtain a mixture solution containing silver oxalate. Impurities were removed from the mixture solution. 1.5 g of polyvinylpyrrolidone (weight-average molecular weight of 10000) was added to 1 L of the mixture solution, and stirred for 30 minutes while an ultrasonic wave was applied. Thus, silver oxalate was dispersed. An appropriate amount of acetic acid was added to the dispersion liquid, to adjust the PH to 3. The dispersion liquid was put into an autoclave. The dispersion liquid was pressurized under a pressure of 0.5 MPa. The dispersion liquid was heated to 130°C while being stirred at a rate of 150 rpm. The dispersion liquid was stirred at the temperature for 30 minutes, and a liquid that contained fine particles containing silver as a main component was obtained.

### [Example 2]

Liquid that contained fine particles containing silver as a main component was obtained in the same manner as in example 1 except that 1.0 g of polyethyleneimine (weight-average molecular weight: 25000) was added instead of polyvinylpyrrolidone.

### [Example 3]

Liquid containing fine particles was obtained in the same manner as in example 1 except that 3.0 g of polyethylene glycol (weight-average molecular weight: 5000) was added instead of polyvinylpyrrolidone.

### [Comparative example 1]

Liquid containing fine particles was obtained in the same manner as in example 1 except that 5.0 g of polyethylene glycol (weight-average molecular weight: 400) was added instead of polyvinylpyrrolidone and the stirring rate was 300 rpm during the reaction.

### [Comparative example 2]

Dispersion liquid of spherical fine particles formed of silver was obtained by a liquid phase reduction method.

### [Comparative example 3]

Spherical fine particles formed of silver were processed by a ball mill so as to be flake-like. The process was performed by adding a hydrophobic organic substance in order to prevent aggregation during processing by the ball mill.

### [Manufacturing of coating film]

The liquid according to each of examples 1 to 3 and comparative examples 1 to 2 was mixed with pure water to obtain aqueous ink. The fine particles of comparative example 3 and organic solvent were mixed to obtain organic ink. The ink of each example was applied onto a plate by a spin coater to obtain a coating film. The coating film had a rectangular shape in which the longitudinal dimension was 25 mm and the transverse dimension was 30 mm.

### [Reflection characteristics]

The coating film was visually observed and graded according to the following standard.
A: The image was clearly confirmed as if it was observed on a mirror.
B: The image was clearly confirmed.
C: The image was not clear although the image was able to be confirmed.
D: The image was unclear as if it was observed on ground glass.

The results are indicated below in Table 1.

### [Luster]

The coating film was visually observed and graded according to the following standard.
A: very lustrous
B: lustrous
C: slightly cloudy
D: very cloudy

The results are indicated below in Table 1.

### [Color]

The color of the coating film was visually evaluated. The results are indicated below in Table 1.

**[Table 1]**

| | Example 1 | Example 2 | Example 3 | Comparative example 1 | Comparative example 2 | Comparative example 3 |
|---|---|---|---|---|---|---|
| Ratio P1 (%) | 99 | 97 | 95 | 68 | 5 | 62 |
| Median size D50 (µm) | 0.31 | 0.72 | 8.2 | 1.0 | 0.064 | 8.8 |
| Standard deviation σD (µm) | 0.11 | 0.40 | 3.4 | 0.64 | 0.027 | 5.3 |
| Average thickness Tave (nm) | 26 | 92 | 285 | 131 | 0.062 | 321 |
| D50/Tave | 11.9 | 7.8 | 28.8 | 7.6 | 1.0 | 33.0 |
| Reflection character istics | A | A | B | C | B | D |
| Luster | A | B | B | D | B | D |
| Color | silver | silver | silver | light gray | Yellowish and blackish silver | light gray |

Table 1 indicates that the coating film containing the silver powder according to each example had excellent appearance. The evaluation results clearly indicate that the present invention is superior.

### INDUSTRIAL APPLICABILITY

The silver powder according to the present invention is applicable to various kinds of paint and ink.

### DESCRIPTION OF THE REFERENCE CHARACTERS

2···-particle
4···largest plane

## Claims

1. Silver powder for ink or paint, the silver powder comprising multiple particles containing silver as a main component, wherein
a ratio of the number of particles which are flake-like and each of which has a monocrystalline structure and has a largest plane that is a lattice plane (111), to the total number of particles, is not less than 95%.

2. The silver powder according to claim 1, wherein the silver powder is water-dispersible.

3. The silver powder according to claim 1 or 2, wherein a median size D50 is not less than 0.1 µm and not greater than 10 µm.

4. The silver powder according to any one of claims 1 to 3, wherein a standard deviation of particle sizes is not greater than 5 µm.

5. The silver powder according to any one of claims 1 to 4, wherein an average thickness Tave is not greater than 300 nm.

6. The silver powder according to any one of claims 1 to 5, wherein an aspect ratio (D50/Tave) is not less than 4.

7. Ink comprising the silver powder according to any one of claims 1 to 6.

8. Paint comprising the silver powder according to any one of claims 1 to 6.
